# EUROPEAN PATENT APPLICATION

(11) **EP 0 913 586 A1**
(43) Date of publication of application: **06.05.1999**
(21) Application number: 97933016.4
(22) Date of filing: 24.07.1997
(51) Int. Cl.: F15B 11/00

(54) **HYDRAULIC OIL SUPPLY APPARATUS**

(30) Priority: 26.07.1996 JP 197654/96
(71) Applicant: KOMATSU LTD., Minato-ku, Tokyo 107 (JP)
(72) Inventor: IKEI, Kazunori Oyama Factory of Komatsu Ltd., Oyama-shi Tochigi-ken 323 (JP); YAMASHITA, Kouji Oyama Factory of Komatsu Ltd., Oyama-shi Tochigi-ken 323 (JP); SHINOZAKI, Shinichi Oyama Factory of Komatsu Ltd., Oyama-shi Tochigi-ken 323 (JP); TAKA, Keisuke Oyama Factory of Komatsu Ltd., Oyama-shi Tochigi-ken 323 (JP); MOTOTANI, Masayoshi Oyama Factory of Komatsu Ltd., Oyama-shi Tochigi-ken 323 (JP)
(74) Representative: Fuchs Mehler Weiss & Fritzsche
(86) International application number: JP9702576
(87) International publication number: WO9804838

(57) **Abstract**

In order that the speed of a boom operating cylinder can be increased when a hydraulic motor for swinging and the boom operating cylinder are simultaneously operated, discharged hydraulic oil from a first hydraulic pump (1) is supplied to the boom operating cylinder (7) by means of directional control valves (3) provided with pressure compensating valves (21), and discharged pressure oil from a second hydraulic pump (30) to the hydraulic motor (40) for swinging, by means of a specific directional control valve (33). This discharged hydraulic oil from the second hydraulic pump (30) is joined with the discharged hydraulic oil from the first hydraulic pump (1) via a check valve (42) and a change-over valve (43). When swinging is started, part of the pressure oil from the second hydraulic pump (30) is supplied to the boom operating cylinder (7) without allowing the pump pressure of the second hydraulic pump (30) to increase to a level exceeding that of the pressure in the boom operating cylinder, and without allowing the hydraulic oil from the pump (30) to flow out into a tank.

## Description

### TECHNICAL FIELD

The present invention relates to a pressurized fluid supply system for supplying a discharged pressurized fluid of a hydraulic pump to a plurality of actuators, such as a boom cylinder, an arm cylinder, a bucket cylinder, a traveling hydraulic motor, a pivoting hydraulic motor and so forth of a hydraulic shovel.

### BACKGROUND ART

As a pressurized fluid supply system supplying a discharged pressurized fluid of a hydraulic pump to a plurality of actuators of a hydraulic shovel, there has been known a system called as closed center load sensing system as disclosed in Japanese Unexamined Patent Publication No. Heisei 4-244609. More concretely, a plurality of direction control valves are provided in a discharge passage of a hydraulic pump in parallel for supplying pressurized fluid to a plurality of actuators to establish closed center to shut off a pump port at a neutral position of respective direction control valves. On inlet sides of respective direction control valves, pressure compensation valves are provided to apply the highest load pressure among load pressures of respective actuators to the pressure compensation valves, and in conjunction therewith, a displacement of the hydraulic pump is controlled so that a difference between the highest load pressure and a pump pressure becomes a set value for distributing a flow amount depending upon opening areas of direction control valves of the discharged pressurized fluid of the hydraulic pump simultaneously irrespective of magnitude of the loads of a plurality of actuators.

In the foregoing pressurized fluid supply system, the following problem is encountered when pivoting operation of an upper vehicular body by the pivoting hydraulic motor and operation for actuating working machine by the boom cylinder and the bucket cylinder are performed simultaneously.

For example, when the working machine is actuated by supplying the pressurized fluid to the boom cylinder during steady pivoting operation of the upper vehicular body by supplying the pressurized fluid to the pivoting hydraulic motor, the displacement of the hydraulic pump is instantly increased to correspond to the flow amount of the boom cylinder.

On the other hand, the pressure compensation valve provided in the direction control valve for pivot motion, is actuated in a direction of smaller opening area by a load pressure of the boom cylinder to be placed at a compensated position since the load pressure of the boom cylinder is higher than the load pressure of the pivoting hydraulic motor to make the flow amount supplied to the pivoting hydraulic motor constant even when the displacement of the hydraulic pump is increased. However, because of slight time delay until the pressure compensation valve being placed at the compensated position, the flow amount excessively flows to the pivoting hydraulic motor to temporarily increase pivoting speed during delay period.

Therefore, the upper vehicular body cannot be pivoted smoothly to degrade riding comfort of the operator.

In order to solve the foregoing problem, there has been proposed the pressurized fluid supply system making the pivoting circuit and the working machine circuit independent of each other by separately providing the hydraulic pump supplying the pressurized fluid to the pivoting hydraulic motor.

However, at initiation of pivot motion, the load torque of the pivoting hydraulic motor is large to elevate the pump pressure of the pivoting hydraulic pump to a set pressure of a relief valve to flow most of the discharged flow amount from the relief valve to the tank.

Therefore, an object of the present invention is provide the pressurized fluid supply system for solving the foregoing problem.

### DISCLOSURE OF THE INVENTION

The first invention is a pressurized fluid supply system comprising:
a first hydraulic circuit including a variable displacement type first hydraulic pump 1, a plurality of closed center type direction control valves 3, and a plurality of pressure compensation valves 21, a displacement of said first hydraulic pump 1 being controlled to a value corresponding to a highest load pressure, the highest load pressure being applied to respective pressure compensation valve 21 for distributing in flow amount a discharged pressurized fluid of said first hydraulic pump 1 to a plurality of actuators depending upon opening areas of said direction control valves 3;
a second hydraulic circuit supplying a discharged pressurized fluid of a second hydraulic pump 30 to a specific actuator by an open center type specific direction control valve 33;
a communication passage 41 connecting a discharge passage 32 of said second hydraulic pump 30 to a discharge passage 2 of said first hydraulic pump 1; and
a check valve 42 and a switching valve 43 provided in said communication passage 41,
said check valve 42 being formed so as not to flow the pressurized fluid from said discharge passage 2 of said first hydraulic pump 1 to said discharge passage 32 of said second hydraulic pump 30; and
said switching valve 43 being switchable between a shut off position and a communicating position.

By the first invention, since the discharged pressurized fluid of the first hydraulic pump 1 can be distributed to a plurality of actuators depending upon opening areas of the direction control valves 3, a plurality of actuators can be actuated simultaneously by one hydraulic pump.

Since the first hydraulic circuit having the first hydraulic pump 1 and the second hydraulic circuit having the second hydraulic pump 30 are independent of each other, when the actuator and the specific actuator are operated simultaneously by simultaneously operating the direction control valve 3 and the specific direction control valve 33, the specific actuator will never be accelerated.

On the other hand, by placing the switching valve 43 provided in the communication passage 41 at the communicating position, when an actuation pressure of the specific actuator is higher than the actuation pressure of the actuator, the pump pressure of the second hydraulic pump 30 is merely elevated up to the actuation pressure of the actuator, and a little flow amount is supplied to the specific actuator and remaining flow amount is supplied to the actuator.

By this, the discharged pressurized fluid of the second hydraulic pump 30 may not be wasted, and the actuation speed of the actuator can be high.

On the other hand, since the check valve 42 is provided in the communication passage 41, when the actuation pressure of the specific actuator is lower than the actuation pressure of the actuator, the discharged pressurized fluid of the first hydraulic pump 1 is not supplied to the specific actuator.

The second invention is the pressurized fluid supply system, in which when said direction control valve 3 and said switching valve 43 provided in said first hydraulic circuit in the first invention are cooperated so that when said direction control valve 3 is operated to a position for supplying the pressurized fluid, said switching valve 43 is placed at said communicating position.

By the second invention, by operating the direction control valve 3, the switching valve 43 is automatically placed at the communicating position. Therefore, operation becomes easy.

The third invention is that said direction control valve 3 in the second invention is switched by a pilot pressure, said switching valve 43 is placed at shut off position by a spring 44, and is placed at the communicating position by a pressure acting on a pressure receiving portion 45, and a switching pilot pressure of said direction control valve 3 is supplied to said pressure receiving portion 45 to cooperate said direction control valve 3 and said switching valve 43.

By the third invention, utilizing the switching pilot pressure of the direction control valve 3, the switching valve 43 is switched to the communicating position. Therefore, the pilot pressure piping may be connected to the pressure receiving portion 45 of the switching valve 43 to simplify the construction.

The fourth invention is, in respective of the foregoing invention, a spool 92 is inserted into a spool bore 91 of a valve body 90 to form said specific direction control valve 33, and an auxiliary spool 97 is provided within an auxiliary spool bore 93 of said valve body 90 to form said switching valve 43.

By the fourth invention, since the specific direction control valve 33 and the switching valve 43 are provided in the same valve body 90, piping can be simplified.

The fifth invention is, in the first invention, a spool 83 is inserted into a spool bore 81 of a valve body 80 to form said direction control valve 3, a pressure compensation valve is provided in said valve body 80,
a spool 92 is inserted into a spool bore 91 of a valve body 90 stacked and coupled with said valve body 80 to form said specific direction control valve 33, and an auxiliary spool 97 is inserted into an auxiliary spool bore 93 of said valve body 90 to form the switching valve for communicating and shutting off an inflow port 94 and an outflow port 95,
the discharged pressurized fluid of said first hydraulic pump 1 is supplied on the side of inflow port of said valve body 80 from said outflow port 95, and the discharged pressurized fluid of said second hydraulic pump 30 is supplied to said inflow port 94, and
the tank ports of said valve body 80 and said valve body 90 are communicated respectively.

By the fifth invention, the direction control valve 3 and the specific direction control valve 33 can be coupled in compact. Also, respective drain ports are communicated to simplify drain piping.

On the other hand, the discharged pressurized fluid of the first hydraulic pump 1 flows into the valve body 80 of the direction control valve 3 via the valve body 90 of the specific direction control valve 33. Also, by the switching valve 43 provided in the valve body 90, a part of the discharged pressurized fluid of the second hydraulic pump 30 can be supplied to the valve body 80. By this, piping can be simplified significantly.

### BRIEF DESCRIPTION OF THE DRAWINGS

The present invention will be understood more fully from the detailed description given herebelow and from the accompanying drawings of the preferred embodiment of the present invention, which, however, should not be taken to be limitative to the invention, but are for explanation and understanding only.

In the drawings:
Fig. 1 is a hydraulic circuit diagram showing the first embodiment of the present invention;
Fig. 2 is an explanatory illustration showing a detail of a direction control valve;
Fig. 3 is a hydraulic circuit diagram showing the second embodiment of the present invention;
Fig. 4 is a section showing a particular construction of the direction control valve and a specific direction control valve; and
Fig. 5 is a section showing another example of particular construction of the specific direction control valve.

### BEST MODE FOR IMPLEMENTING THE INVENTION

Hereinafter, the preferred embodiment of a pressurized fluid supply system according to the present invention will be discussed with reference to the accompanying drawings.

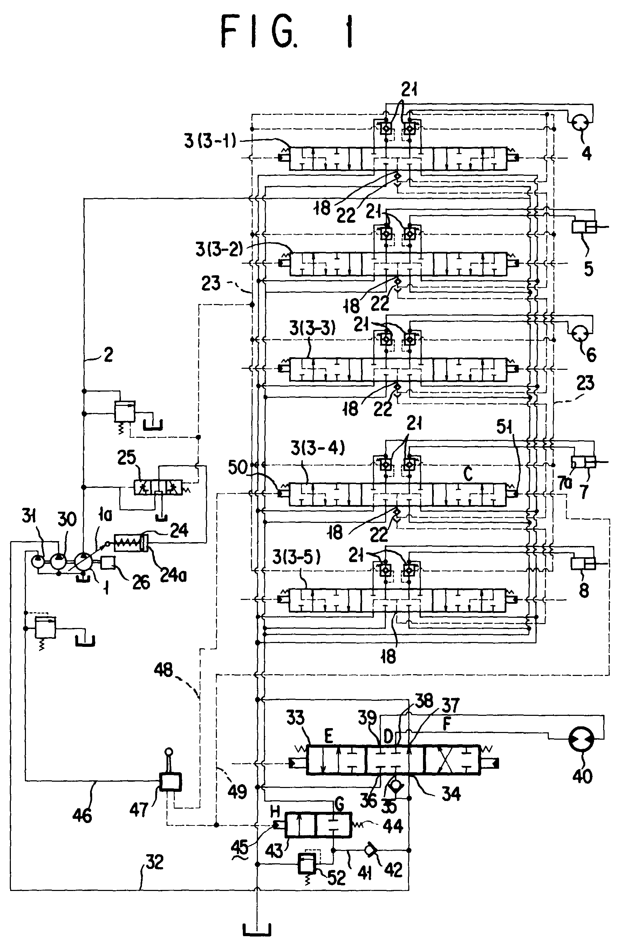

As shown in Fig. 1, a plurality of direction control valves 3 are connected to a discharge passage 2 of a variable displacement type first hydraulic pump 1 in parallel. These direction control valves 3 are the valves for supplying pressurized fluid to a plurality of actuators, for example, a left travel controlling direction control valve 3-1 for supplying the pressurized fluid to a left traveling hydraulic motor 4 of a power shovel, a bucket controlling direction control valve 3-2 for supplying the pressurized fluid to a bucket cylinder 5, a right travel controlling direction control valve 3-3 for supplying the pressurized fluid to a right traveling hydraulic motor 6, a boom controlling direction control valve 3-4 for supplying the pressurized fluid to a boom cylinder 7, and an arm controlling direction control valve 3-5 for supplying the pressurized fluid to an arm cylinder 8.

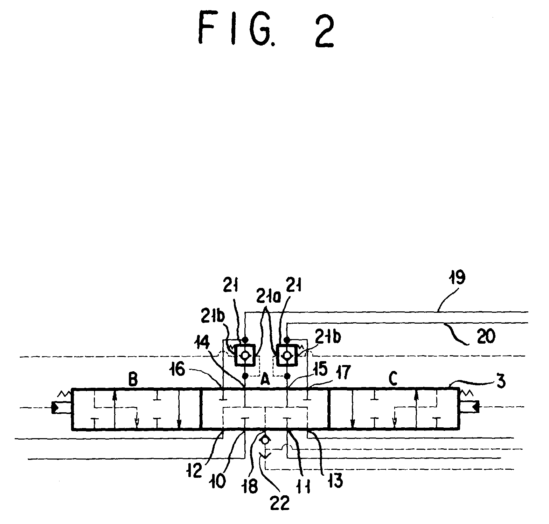

As shown in Fig. 2, each direction control valve 3 has first and second pump ports 10 and 11, first and second tank ports 12 and 13, first and second actuator ports 14 and 15, first and second auxiliary ports 16 and 17 and a load pressure detecting port 18 to be switched between a neutral position A, a first position B and a second position C.

At the first position B, the first pump port 10 and the first actuator port 14 are communicated, the first auxiliary port 16 and the load pressure detecting port 18 are communicated, and the second auxiliary port 17 and the second tank port 13 are communicated.

At the second position C, the second pump port 11 and the second actuator port 15 are communicated, the second auxiliary port 17 and the load pressure detecting port 18 are communicated and the first auxiliary port 16 and the first tank port 12 are communicated.

At the neutral position A, the first and second pump ports 10 and 11 are shut off. Thus, the direction control valve 3 is constructed as a closed center type three position spool valve.

In circuits 19 and 20 connecting the first and second actuator ports 14 and 15 of each direction control valve 3 and actuator, pressure compensation valves 21 are provided, respectively. Outlet sides of respective pressure compensation valves 21 are connected to the first and second auxiliary ports 16 and 17.

The pressure compensation valve 21 is biased in a direction of smaller opening area by a pressure on an inlet side acting on a first pressure receiving portion 21a and is biased in a direction of greater opening area by a pressure acting on a second pressure receiving portion 21b.

The pressures of the load pressure detecting ports 18 of respective direction control valves 3 are compared by a shuttle 22 and the highest pressure is introduced into the load pressure detecting circuit 23. The pressure of the load pressure detecting circuit 23 acts to the second pressure receiving portion 21b of each pressure compensation valve 21.

A swash plate 1a of the first hydraulic pump 1 is pivoted to tilt by a displacement control cylinder 24. To a pressure receiving chamber 24a of the displacement control cylinder 24, a pump discharge pressure is controlled to supply by a control valve 25. The control valve 25 is operated to switch by a pressure difference between the pump discharge pressure and a load pressure of the load pressure detecting circuit 23 to tilt the swash plate 1a so that a differential pressure between the pump discharge pressure and the load pressure constantly becomes a set value.

As set forth above, when a plurality of direction control valves 3 are operated simultaneously, the discharged pressurized fluid of the first hydraulic pump is distributingly supplied proportional to the opening areas of the direction control valves 3 of a plurality of actuators.

By an engine 26 in common with the first hydraulic pump, a fixed displacement type second hydraulic pump 30 and a pilot pressure generating hydraulic pump 31 are driven. In a discharge passage 32 of the second hydraulic pump 30, a specific direction control valve 33 is provided.

The specific direction control valve 33 includes a first pump port 34, a second pump port 35, first and second drain ports 36 and 37 and first and second actuator ports 38 and 39, and is switched between a neutral position D, a first position E and a second position F.

At the neutral position D, the first pump port 34 and the second tank port 37 are communicated, and other ports are shut off. At the first position E, the second pump port 35 and the first actuator port 38 are communicated, and the second actuator port 39 and the first tank port 36 are communicated. At the second position F, the second pump port 35 and the second actuator port 39 are communicated and the first actuator port 38 and the first tank port 36 are communicated. Thus, the specific direction control valve 33 is constructed as an open center type three position spool valve.

The first and second actuator ports 38 and 39 are connected to the specific actuator, for example, a pivoting hydraulic motor 40.

The discharge passage 32 of the second hydraulic pump 30 is connected to the discharge passage 2 of the first hydraulic pump 1 through a communication passage 41. In the communication passage 41, a check valve 42 and a switching valve 43 are provided.

The switching valve 43 is held at a shut off position G by means of a spring 44, and is placed at communicating position H by a pressure of a pressure receiving portion 45.

In the discharge passage 46 of the pilot pressure generating hydraulic pump 31, a pilot valve 47 is provided. The pilot valve 47 outputs the pressurized fluid to the first and second pilot circuits 48 and 49. The first and second pilot circuits 48 and 49 are connected to the first and second pressure receiving portions 50 and 51 of the boom controlling direction control valve 3-4, and in conjunction therewith, the second pilot circuit 49 is connected to the pressure receiving portion 45 of the switching valve 43.

Next, operation will be discussed.

When the boom controlling direction control valve 3-4 is placed at the second position C and the specific direction control valve 33 is placed at the first position E or the second position F, the pressurized fluid is output from the pilot valve 47 to the second pilot circuit 49 to place the switching valve 43 at the communicating position H.

By this, the discharge passage 32 of the second hydraulic pump 30 is communicated with the discharge passage 2 of the first hydraulic pump 1. Since the discharged pressurized fluid of the second hydraulic pump 30 is supplied to an up chamber 7a of the boom cylinder 7, the pressure of the second hydraulic pump 30 is only elevated up to the pressure of the up chamber 7a of the boom cylinder 7.

On the other hand, since the pivoting hydraulic motor 40 becomes large in torque upon initiation of operation, the pressure of the second hydraulic pump 30 tends to be elevated up to a set pressure of the relief valve 52. However, the pressure of the second hydraulic pump 30 cannot be elevated up to high pressure (higher pressure than the pressure of the up chamber 7a of the boom cylinder 7) corresponding to the torque upon initiation of operation and is merely elevated up to the pressure of the up chamber 7a of the boom cylinder 7 as set forth above. The flow amount supplied to the pivoting hydraulic motor 40 is a little and the remaining flow amount is supplied to the up chamber 7a of the boom cylinder 7.

Accordingly, the discharged pressurized fluid of the second hydraulic pump 30 is not relieved from the relief valve 52 to the tank and thus will never be wasted. Thus, by the discharged pressurized fluid of the second hydraulic pump 30, an expansion speed of the boom cylinder 7 becomes fast.

When the pivoting hydraulic motor 40 is initiated driving to be in a steady state revolution, the pressure becomes low pressure (a pressure lower than the pressure within the up chamber 7a of the boom cylinder 7). Since the check valve 42 is provided in the communication passage 41, the discharged pressurized fluid of the first hydraulic pump 1 is not supplied to the discharge passage 32 of the second hydraulic pump 30 and the pressure in the up chamber 7a of the boom cylinder 7 is maintained at the predetermined pressure.

Next, discussion will be given for the second embodiment of the present invention.

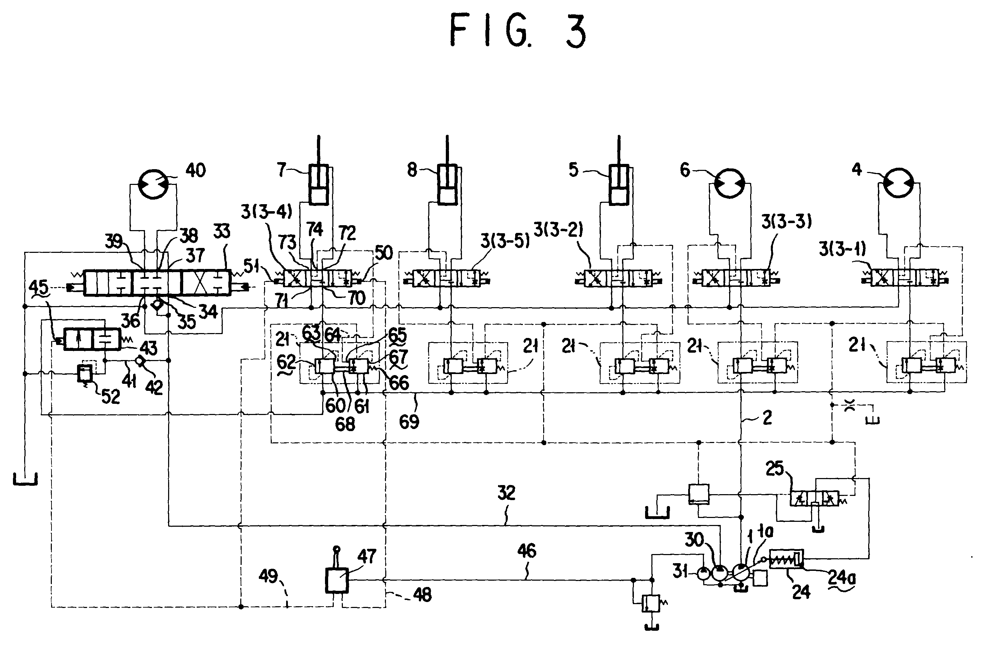

As shown in Fig. 3, on the inlet side of each direction control valve 3, the pressure compensation valve 21 is provided. The pressure compensation valve 21 is one disclosed in Japanese Unexamined Patent Publication No. Heisei 4-244609 and has a check valve portion 60 and a pressure reduction valve portion 61. The check valve portion 60 is biased in an open direction by an inlet pressure of a pressure chamber 62, and is biased in a close direction by an outlet pressure of the pressure chamber 63. The outlet side is connected to the direction control valve 3. The pressure reduction valve portion 61 is biased in open direction by the load pressure of the own actuator introduced into a pressure chamber 65 by a load pressure induction pipe 64 and is biased in close direction by a weak spring 66 and an outlet pressure introduced into the pressure chamber 67. In conjunction therewith, a pushing rod 68 pushing toward a closing side of the check valve portion 60 is provided. The outlet sides of respective pressure reduction valve portions 61 are respectively communicated with load pressure detection pipes 69.

The direction control valve 3 has a pump port 70, a tank port 71, first and second actuator ports 72 and 73 and a load pressure detecting port 74. To the load pressure detecting port 74, the load pressure induction pipe 64 is connected.

Next, particular constructions of the direction control valve 3 and the specific direction control valve 33 will be discussed.

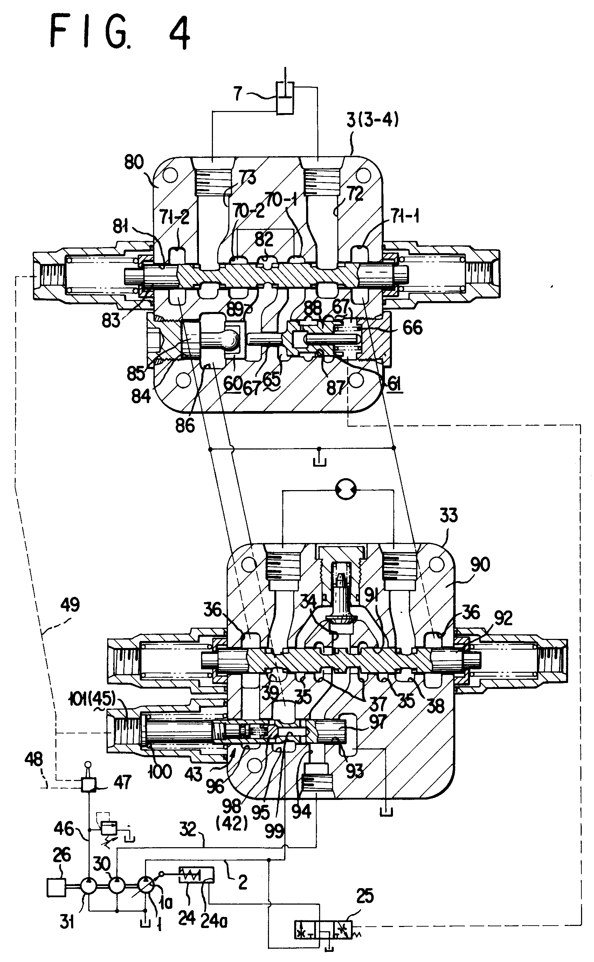

As shown in Fig. 4, to a spool bore 81 of a valve body 80, on both of left and right sides of an inlet port 82, first and second pump ports 70-1 and 70-2, first and second actuator ports 72 and 73, first and second tank ports 71-1 and 71-2 are formed. Within the spool bore 81, a spool 83 is inserted to form the direction control valve 3.

In a bore 84 of the valve body 80, a spool 85 is inserted to form a check valve portion 60 to form an inflow port 86. In a valve hole 87 of the valve body 80, a spool 88 forming a pressure reducing portion 61 is provided to form the pressure compensation valve to communicate the output side with the inlet port 82 by a fluid conduit 89.

The specific direction control valve 33 is formed with a spool bore 91 in a valve body 90 of the same size as the valve body 80 of the direction control valve 3. In the spool bore 91, the first pump port 34 is formed. On both of left and right sides of the first pump port 34, the second tank port 37, the second pump port 35, the first and second actuator ports 38 and 39, and a first tank port 36 are formed respectively. A spool 92 is inserted into the spool bore 91.

In the valve body 90, an auxiliary spool bore 93 is formed. In the spool bore 93, an inflow port 94, an outflow port 95 and a tank port 96 are formed. By inserting an auxiliary spool 97 into the auxiliary spool bore 93, the switching valve 43 is formed.

Within the auxiliary spool 97, a fluid conduit 99 having a check valve 98 is formed. The auxiliary spool 97 is held at an illustrated position by a spring 100 to be placed at a position shutting off the inflow port 94 and the outflow port 95. When the pressurized fluid is supplied to a pressure receiving chamber 101, the auxiliary spool 97 is moved toward right to be placed at a position establishing communication between the inflow port 94 and the outflow port 95 by the fluid conduit 99. Then, when the valve body 80 and the valve body 90 are stacked, respective of the spool bores 81 and 91 are placed at the same position to communicate the drain ports with each other, and the inflow port 86 and the outflow port 95 are communicated with each other.

As set forth above, since the direction control valve 3 and the specific direction control valve 33 are stacked and integrated, these can be mounted in a narrow space.

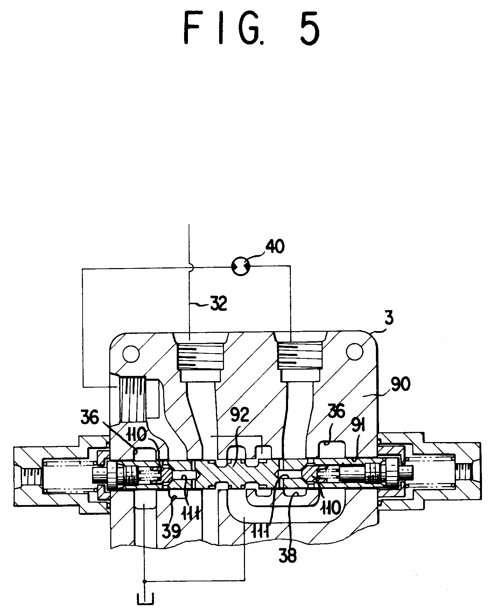

As shown in Fig. 5, the specific direction control valve 33 may be one provided with a load check valve 110 within the spool 92. More particularly, fluid conduits 111 having the load check valves 110 are respectively formed on both of the left and right sides of the spool 92, and the pressurized fluid flows into the first and second actuator ports 38 and 39 from fluid conduit 111 by opening the load check valves 110.

## Claims

1. A pressurized fluid supply system comprising:
a first hydraulic circuit including a variable displacement type first hydraulic pump 1, a plurality of closed center type direction control valves 3, and a plurality of pressure compensation valves 21, a displacement of said first hydraulic pump 1 being controlled to a value corresponding to a highest load pressure, the highest load pressure being applied to respective pressure compensation valve 21 for distributing in flow amount a discharged pressurized fluid of said first hydraulic pump 1 to a plurality of actuators depending upon opening areas of said direction control valves 3;
a second hydraulic circuit supplying a discharged pressurized fluid of a second hydraulic pump 30 to a specific actuator by an open center type specific direction control valve 33;
a communication passage 41 connecting a discharge passage 32 of said second hydraulic pump 30 to a discharge passage 2 of said first hydraulic pump 1; and
a check valve 42 and a switching valve 43 provided in said communication passage 41,
said check valve 42 being formed so as not to flow the pressurized fluid from said discharge passage 2 of said first hydraulic pump 1 to said discharge passage 32 of said second hydraulic pump 30; and
said switching valve 43 being switchable between a shut off position and a communicating position.

2. A pressurized fluid supply system as set forth in claim 1, wherein when said direction control valve 3 and said switching valve 43 provided in said first hydraulic circuit are cooperated so that when said direction control valve 3 is operated to a position for supplying the pressurized fluid, said switching valve 43 is placed at said communicating position.

3. A pressurized fluid supply system as set forth in claim 2, wherein said direction control valve 3 is switched by a pilot pressure, said switching valve 43 is placed at shut off position by a spring 44, and is placed at the communicating position by a pressure acting on a pressure receiving portion 45, and a switching pilot pressure of said direction control valve 3 is supplied to said pressure receiving portion 45 to cooperate said direction control valve 3 and said switching valve 43.

4. A pressurized fluid supply system as set forth in claim 1, 2 or 3, wherein a spool 92 is inserted into a spool bore 91 of a valve body 90 to form said specific direction control valve 33, and an auxiliary spool 97 is provided within an auxiliary spool bore 93 of said valve body 90 to form said switching valve 43.

5. A pressurized fluid supply system as set forth in claim 1, wherein a spool 83 is inserted into a spool bore 81 of a valve body 80 to form said direction control valve 3, a pressure compensation valve is provided in said valve body 80,
a spool 92 is inserted into a spool bore 91 of a valve body 90 stacked and coupled with said valve body 80 to form said specific direction control valve 33, and an auxiliary spool 97 is inserted into an auxiliary spool bore 93 of said valve body 90 to form the switching valve 43 for communicating and shutting off an inflow port 94 and an outflow port 95,
the discharged pressurized fluid of said first hydraulic pump is supplied on the side of inflow port of said valve body 80 from said outflow port 95, and the discharged pressurized fluid of said second hydraulic pump 31 is supplied to said inflow port 94, and
the tank ports of said valve body 80 and said valve body 90 are communicated respectively.
